Europäisches Patentamt

European Patent Office

Office européen des brevets

(19)

(11) Veröffentlichungsnummer: **0 113 898**
A2

# (12) EUROPÄISCHE PATENTANMELDUNG

(21) Anmeldenummer: 83112730.3

(22) Anmeldetag: 17.12.83

(51) Int. Cl.³: **A 23 C 21/02**

(30) Priorität: 21.12.82 DE 3247188

(43) Veröffentlichungstag der Anmeldung: 25.07.84
Patentblatt 84/30

(84) Benannte Vertragsstaaten: **AT BE CH DE FR GB IT LI LU NL SE**

(71) Anmelder: **Döhler Essenzenfabrik Leo Gemmer GmbH & Co. KG, Riedstrasse 7-9, D-6100 Darmstadt (DE)**

(72) Erfinder: **Meyer, Otto-Werner, Kleiststrasse 34, D-6100 Darmstadt-Arheilgen (DE)**

(74) Vertreter: **Werner, Hans-Karsten, Dr. et al, Deichmannhaus am Hauptbahnhof, D-5000 Köln 1 (DE)**

(54) Instantisiertes, enzymatisch hydrolysiertes Molke-Pulver, Verfahren zu seiner Herstellung und seine Verwendung.

(57) Enzymatisch hydrolisiertes Molke-Pulver wird instantisiert, gewünschtenfalls in Gegenwart weiterer Substanzen, wobei gewünschtenfalls auch Zucker, Mineralstoffe und Aminosäure vor der Instantisierung entzogen worden sind. Die Instantisierung erfolgt durch Vakuum-Band-Trocknung.

EP 0 113 898 A2

Gegenstand der vorliegenden Erfindung ist ein hydrolysiertes Molke-Pulver, welches instantisiert ist, Verfahren zu seiner Herstellung und seine Verwendung.

Molke, die bei der Käse- und Quarkherstellung in großen Mengen anfällt, ist trotz seiner wertvollen Bestandteile lange Zeit ungenutzt in die Abwässer geleitet worden und hat dabei eine erhebliche Umweltbelastung dargestellt. Noch heute werden große Mengen Molke getrocknet und als Viehfutter verwertet. Für die menschliche Ernährung ist Molke nur bedingt verwendbar, da sie erhebliche Mengen Lactose enthält, die insbesondere von Erwachsenen nur in geringen Mengen resorbiert und vertragen wird. Es sind daher zahllose Versuche unternommen worden, entweder die Lactose aus der Molke zu entfernen oder sie durch Hydrolyse in die besser verträglichen und stärker süßenden Zucker Glucose und Galaktose aufzuspalten. Außer der Spaltung durch Säuren hat sich inzwischen die Hydrolyse mit Hilfe von Enzymen, insbesondere Lactasen durchgesetzt. Durch die Verwendung trägergebundener Lactasen ist es möglich, die Kosten der Hydrolyse erheblich zu senken und darüberhinaus den unerwünschten Zusatz von Fremdstoffen zur Molke zu vermeiden. Molke, die mit Hilfe trägergebundener Lactase hydrolysiert wurde, enthält keine Fremdstoffe und unterscheidet sich von der eingesetzten Molke nur durch die weitgehende Umwandlung der Lactose in je 1 mol Glucose und Galaktose. Im technischen Maßstab läßt sich diese enzymatische Hydrolyse der Molke so durchführen, daß 70-90, meistens ca. 80% der Lactose hydrolysiert werden. Enzymatisch hydrolysierte Molke ist aufgrund ihres geringeren Lactosegehaltes auch für Erwachsene wesentlich besser verträglich und schmeckt wesentlich süßer als das Ausgangsprodukt, da sowohl Glucose als auch Galaktose eine wesentlich höhere Süßkraft aufweisen als Lactose.

Hydrolysierte Molke, insbesondere auch enzymatisch hydrolysierte Molke, wurde bisher in überwiegendem Maße zu einem Sirup mit 25 bis 35% Wassergehalt konzentriert und in dieser Form als Süssungsmittel und Backhilfsmittel eingesetzt. Derartige hydrolysierte Molke-Sirupe weisen jedoch nur eine begrenzte Haltbarkeit auf und sind in ihrer Anwendbarkeit begrenzt. Während nicht hydrolysierte Molke relativ einfach in ein Pulver überführt werden kann, das dann als Viehfutter eingesetzt wird, läßt sich hydrolysierte Molke, auch mit Hilfe von trägergebundener Lactase hydrolysierte Molke, nicht sprühtrocknen. Die durch Hydrolyse der Lactose entstehenden Zucker Galaktose und Glucose sind wesentlich hitzeempfindlicher und hygroskopischer als die Lactose. In einem normalen Sprühtrockner ergibt dies bei 75 bis 80% hydrolysierter Lactose schwere Ablagerungen im Trockner durch die hohen Temperaturen, so daß es nicht möglich ist, die Trockner kontinuierlich arbeiten zu lassen. Man hat daher versucht, enzymatisch hydrolysierte Molke in einem 3-Stufen Sprühtrockner zu einem Pulver zu verarbeiten; vgl. Deutsche Milchwirtschaft, 1982, Seite 530-538. Bei dem dort beschriebenen Verfahren wird die enzymatisch hydrolysierte Molke in der ersten Stufe zusammen mit heißer Luft unter speziellen Bedingungen in einen Trockenturm gesprüht, in welchem nur laminarer Luftfluß herrscht. Das so entstandene Produkt wird auf einem luftdurchlässigen Textilband als Filter aufgefangen und durch zwei weitere Trocknungsstufen geführt.

Hierbei wird nach Möglichkeit eine Bewegung des Pulvers auf der Filtermatte vermieden und der Gehalt an feinem Pulver in der Abluft in einem Bereich von 1 bis 4% gehalten. Vor der dritten Trocknungsstufe findet angeblich bei einem Feuchtigkeitsgehalt von bis zu 12% eine Agglomeration statt, die zu einer Stabilisierung einer porösen Struktur führen soll, woraufhin eine weitere Trocknung bei niedriger Temperatur erfolgt. Man erhält so angeblich große Agglomerate, die sich über eine entsprechende Siebmaschine auf die gewünschte Struktur bringen lassen. Dieses neue Verfahren ist kompliziert und aufwendig und mit Sicherheit im großtechnischen Betrieb nur schwer zu steuern. Die nach diesem Verfahren erhaltenen gemahlenen Agglomerate lassen sich nur langsam und unter Zuhilfenahme mechanischer Hilfsmittel wieder auflösen. Es handelt sich somit nicht um ein instantisiertes Pulver.

Die Erfindung hat sich die Aufgabe gestellt, mit technisch einfachen Mitteln und kostengünstig in leicht reproduzierbarer und kontrollierbarer Weise ein instantisiertes, enzymatisch hydrolysiertes Molke-Pulver herzustellen. Eine weitere Aufgabe bestand darin, ein instantisiertes, enyzmatisch hydrolysiertes Molke-Pulver anzubieten, welches zusätzlich mindestens eine Substanz aus der Gruppe tierisches oder pflanzliches Eiweiß, Vitamine, Mineralstoffe, Stärken, Zucker, Süßstoffe, Fruchtsaftkonzentrate und Aromen enthält. Hierbei kann es erwünscht sein, daß der als Ausgangssubstanz verwendeten enyzmatisch hydrolysierten Molke die Zucker, Mineralstoffe und Aminosäuren zumindest teilweise entzogen wurden, so daß einerseits die Zusammensetzung des Endproduktes steuerbar und variierbar ist und zum anderen die bei der Abtrennung anfallenden Zucker, Mineralstoffe und Aminosäuren einer anderen Verwendung zugeführt werden können.

Diese Aufgabe läßt sich überraschenderweise dadurch
lösen, daß man enymatisch hydrolysierte Molke gegebenenfalls mit mindestens einer der zusätzlichen erhaltenen Substanzen vermischt und einer Vakuum-Band-Trocknung unterwirft. Dabei können gewünschtenfalls der als
Ausgangsprodukt verwendeten enzymatisch hydrolysierten
Molke die Zucker, Mineralstoffe und Aminosäuren ganz
oder teilweise entzogen worden sein. In besonders einfacher Weise kann dies durch Ultrafiltration geschehen.
Das Permeat einer derartigen Ultrafiltration kann z.B.
direkt mit Fruchtsaftgrundstoffen, Vitaminen etc. versetzt zu einem Fruchtsaftgetränk verarbeitet werden.
Das Permeat kann aber auch in seine Bestandteile aufgetrennt und einzeln verwertet werden.

Das erfindungsgemäße instantisierte, enzymatisch hydrolysierte Molke-Pulver, insbesondere sofern es zusätzlich mindestens eine Substanz aus der Gruppe tierisches
oder pflanzliches Eiweiß, Vitamine, Mineralstoffe,
Stärken, Zucker, Süßstoffe, Fruchtsaftkonzentrate und
Aromen enthält, kann direkt als Kraftsportnahrung,
Backhilfsmittel, Getränkepulver oder Diätetikum verwendet werden. Dadurch, daß diese Produkte instantisiert
sind, lassen sie sich sehr einfach einsetzen, so daß
sie der Endverbraucher ohne Hilfsmittel rasch wieder
auflösen oder ohne Qualitätseinbußen den Endprodukten
beifügen kann.

Die erfindungsgemäß verwendete Vakuum-Band-Trocknung
erfolgt in handelsüblichen Vakuum-Band-Trocknern, wie
sie beispielsweise von der Firma Kasag, Zürich oder
Choke-Wartman angeboten werden. In diesen Geräten wird die enzymatisch hydrolysierte Molke im Vakuum auf ein Transportband aufgegeben, wobei sie beim Eintritt in das Vakuum aufschäumt. Durch die veränderlichen Heiztemperaturen und das Vakuum ist es dann möglich, einen Wärme- und Stoffaustausch zu verwirklichen, der schonende Trocknung der temperaturempfindlichen Einzelprodukte bzw. Produktgemische ermöglicht.

Die Vakuum-Band-Trocknung liegt technologisch zwischen der Sprühtrocknung und der Gefriertrocknung und ist in der Lage, beispielsweise Pflanzenextrakte zu instantisieren. Es war jedoch nicht vorherzusehen, daß ein technologisch so schwieriges Produkt wie enzymatisch hydrolysierte Molke mit ihrem hohen Gehalt an schwerkristallisierenden Zuckern ebenfalls in einem Vakuum-Band-Trockner instantisiert werden kann. Keinesfalls vorhersehbar war, daß es erfindungsgemäß möglich ist, enzymatisch hydrolysierte Molke sogar zusammen mit anderen Substanzen, wie tierischem oder pflanzlichem Eiweiß, Vitaminen, Mineralstoffen, Stärken, Zucker, Süßstoffen, Fruchtsaftkonzentraten und Aromen, zu einem instantisierten Pulver zu verarbeiten.

Diese Pulver sind lagerstabil, rieselfähig, leicht abpackbar und dosierbar, vom Endverbraucher leicht einsetzbar und verarbeitbar und können in ihrer Zusammensetzung optimal eingestellt werden. Dies ist insbesondere dadurch möglich, daß auch solche enzymatisch hydrolysierte Molke eingesetzt werden kann, der Zucker, Mineralstoffe und Eiweiß zumindest teilweise entzogen wurden, beispielsweise durch Ultrafiltration. Es lassen sich aber erfindungsgemäß auch temperatur- und feuchtigkeitsempfindliche Komponenten, wie tierisches oder pflanzliches Eiweiß, Vitamine, Mineralstoffe,

Stärken, Zucker, Süßstoffe, Fruchtsaftkonzentrate und Aromen, zusammen mit der enzymatisch hydrolysierten Molke zu einem instantisierten Pulver verarbeiten. Als bevorzugte Anwendungsgebiete sind daher Kraftsportnahrung und Diätetika, aber auch Backhilfsmittel und Getränkepulver zu nennen.

In den nachfolgenden Beispielen sind typische instantisierte, enzymatisch hydrolysierte Molke-Pulver, das Verfahren zu ihrer Herstellung und ihre Verwendung näher beschrieben.

## BEISPIEL 1

10 t Süßmolke wurden mit einem trägergebundenen Laktase-Präparat der Firma Röhm hydrolisiert.
Der Hydrolysegrad betrug 82%. Nach der Hydrolyse wurde die Molke in einem Fallstromverdampfer mit anhängendem Umlaufverdampfer auf 65% TRS aufkonzentriert.

Dieses Molkekonzentrat wurde auf einem Vakuum-Band-Trockner (Typ Kasag) getrocknet.

Trocknungsbedingungen:

Temperatur

| Heizplatte | 1 | 115°C |
|---|---|---|
| " | 2 | 90°C |
| " | 3 | 70°C |
| " | 4 | 18°C |

Vakuum 10 mbar
Bandgeschwindigkeit 50 min.
Es wurde ein instantisiertes Pulver erhalten.

## BEISPIEL 2

Molkekonzentrat, wie in Beispiel 1 beschrieben, wurde zu gleichen Teilen mit Orangensaftkonzentrat (65° Brix) gemischt, und ebenfalls bei den o. g. Bedingungen im Vakuum-Band-Trockner getrocknet und instantisiert.
Man erhält ein leicht lösliches Pulver, das nach Auflösen in Wasser ein gutschmeckendes Erfrischungsgetränk ergibt, in das sowohl Zuckersüßung als auch Diätsüßung eingebaut werden kann.

BEISPIEL 3

Molkekonzentrat aus einer hydrolisierten Molke, der durch Ultrafiltration ca. 80% der Zucker, Mineralstoffe und Aminosäuren entzogen wurde, wurde danach mit Orangensaftkonzentrat (65° Brix) gemischt und bei den oben genannten Bedingungen im Vakuum-Band-Trockner getrocknet. Es wurde ein instantisiertes Pulver erhalten.

0113898

P a t e n t a n s p r ü c h e

1. Instantisiertes, enzymatisch hydrolysiertes Molke-Pulver.

2. Instantisiertes Molke-Pulver gemäß Anspruch 1, enthaltend zusätzlich mindestens eine Substanz aus der Gruppe tierisches oder pflanzliches Eiweiß, Vitamine, Mineralstoffe, Stärken, Zucker, Süßstoffe, Fruchtsaftkonzentrate und Aromen.

3. Instantisiertes Molke-Pulver gemäß Anspruch 1 oder 2, dadurch gekennzeichnet, daß der als Ausgangssubstanz verwendeten enzymatisch hydrolysierten Molke die Zucker, Mineralstoffe und Aminosäuren ganz oder teilweise entzogen wurden.

4. Verfahren zur Herstellung eines instantisierten enzymatisch hydrolysierten Molke-Pulvers, enthaltend gegebenenfalls zusätzlich mindestens eine Substanz aus der Gruppe tierisches oder pflanzliches Eiweiß, Vitamine, Mineralstoffe, Stärken, Zucker, Süßstoffe, Fruchtsaftkonzentrate und Aromen, dadurch gekennzeichnet, daß man enzymatisch hydrolysierte Molke gegebenenfalls mit mindestens einer der zusätzlich enthaltenen Substanzen vermischt und einer Vakuum-Band-Trocknung unterwirft.

5. Verfahren gemäß Anspruch 4, dadurch gekennzeichnet, daß man der als Ausgangsprodukt verwendeten enzymatisch hydrolysierten Molke die Zucker, Mineralstoffe und Aminosäuren ganz oder teilweise entzieht.

6. Verfahren gemäß Anspruch 5, dadurch gekennzeichnet, daß man die enzymatisch hydrolysierte Molke vor der Trocknung einer Ultrafiltration unterwirft.

7. Verwendung instantisierter, enzymatisch hydrolysierter Molke-Pulver, gegebenenfalls enthaltend zusätzlich mindestens eine Substanz aus der Gruppe tierisches oder pflanzliches Eiweiß, Vitamine, Mineralstoffe, Stärken, Zucker, Süßstoffe, Fruchtsaftkonzentrate und Aromen, als Kraftsportnahrung, Backhilfsmittel, Getränkepulver oder Diätetikum.